Europäisches Patentamt

European Patent Office

Office européen des brevets

(19)

(11) **EP 0 666 664 B1**

(12) **FASCICULE DE BREVET EUROPEEN**

(45) Date de publication et mention
de la délivrance du brevet:
**04.11.1998  Bulletin 1998/45**

(51) Int Cl.⁶: **H04L 9/32**

(21) Numéro de dépôt: **95400220.0**

(22) Date de dépôt: **02.02.1995**

(54) **Procédé de signature numérique et d'authentification de messages utilisant un logarithme discret avec un nombre réduit de multiplications modulaires**

Verfahren zur digitalen Unterschrift und Authentifizierung von Nachrichten unter Verwendung eines diskreten Logarithmus mit verringerter Anzahl von modularen Multiplikationen

Method for digital signature and authentication of messages using a discrete logarithm with a reduced number of modular multiplications

(84) Etats contractants désignés:
**DE GB**

(30) Priorité:  **04.02.1994  FR 9401271**

(43) Date de publication de la demande:
**09.08.1995   Bulletin 1995/32**

(73) Titulaires:
- **FRANCE TELECOM**
  **75015 Paris (FR)**
- **LA POSTE**
  **F-92777 Boulogne Billancourt Cédex (FR)**

(72) Inventeur: **Girault, Marc**
**F-14000 Caen (FR)**

(74) Mandataire: **Dubois-Chabert, Guy et al**
**Société de Protection des Inventions**
**25, rue de Ponthieu**
**75008 Paris (FR)**

(56) Documents cités:
- **JOURNAL OF CRYPTOLOGY, vol.4, 1991, USA pages 161 - 174 C.P.SCHNORR 'EFFICIENT SIGNATURE GENERATION BY SMART CARDS'**

## Description

### Domaine technique

La présente invention a pour objet un procédé de signature numérique et d'authentification de messages utilisant un logarithme discret. Elle trouve une application dans la cryptographie dite à clé publique.

L'invention concerne plus particulièrement le domaine des procédés dit "sans transfert de connaissance" (ou "zero-knowledge"). Dans de tels procédés, l'authentification se déroule suivant un protocole qui, de façon prouvée, et sous des hypothèses reconnues comme parfaitement raisonnables par la communauté scientifique, ne révèle rien de la clé secrète de l'entité dont la signature est à authentifier.

### Etat de la technique antérieure

Dans certaines techniques antérieures de signature numérique de messages, l'entité devant émettre un message signé est détentrice d'une clé dont un élément, appelé module, est public et un autre élément est secret. Pour signer un message, cette entité ajoute au message une redondance en utilisant sa clé secrète. Le message émis est donc une fonction du message et de la clé secrète.

Pour vérifier la signature, le destinataire du message utilise la partie publique de la clé et effectue un calcul qui doit redonner le message initial avec sa redondance. En retrouvant la redondance, le destinataire conclut que le message qu'il a reçu n'a pu être transmis que par l'entité qui prétend l'avoir envoyé, puisqu'elle seule était capable de traiter le message de cette manière.

Dans de telles procédures, la sécurité est fondée sur l'extrême difficulté qu'il y a à inverser certaines fonctions. Dans le cas de l'invention qui va être décrite, la sécurité du procédé de signature est fondée sur l'extrême difficulté du problème du logarithme discret. Ce problème consiste, étant donné la relation mathématique : $y=g^x$ modulo n (qui signifie : y est le reste de la division de $g^x$ par n), à retrouver x lorsque l'on connaît n, g et y. Ce problème est impossible à résoudre, en l'état actuel des connaissances, dès que la taille n atteint ou dépasse 500 bits et que celle de x atteint ou dépasse 128 bits.

Dans les systèmes mettant en oeuvre de tels procédés, il existe en général une autorité, en laquelle un ensemble d'utilisateurs a confiance, qui détermine un nombre n de grande taille (au moins 500 bits), constituant le module. L'invention s'applique dès lors que le nombre n est choisi de telle sorte que le problème du logarithme discret soit impossible à résoudre en pratique. Pour cela, il existe essentiellement deux options :

- ou le module n est calculé de telle sorte qu'il soit impossible, en pratique, (c'est-à-dire compte tenu des algorithmes de factorisation existants), de retrouver les facteurs premiers dont il est le produit ;

dans une utilisation classique de cette option, n est le produit de deux grands facteurs premiers distincts ;

- ou ce module est un nombre premier vérifiant certaines propriétés que l'on peut trouver dans la littérature spécialisée ; dans une utilisation classique de cette option, n-1 est le double d'un nombre premier.

L'autorité choisit ensuite un entier g, appelé base, tel que l'ensemble engendré par g, c'est-à-dire l'ensemble constitué des nombres $g^x$ modulo n, lorsque x parcourt l'intervalle [0, n-1], soit un sous-ensemble de taille maximale (ou, en tout cas, de taille suffisamment grande (au moins $2^{128}$)), de cet intervalle. A titre d'exemple, la taille maximale est n-1 lorsque n est premier, proche de n/2 lorsque n est le produit de deux facteurs premiers distincts.

Les nombres n et g sont publiés par l'autorité et doivent être connus de tous les utilisateurs qui y sont rattachés. Dans une variante, ces paramètres sont choisis individuellement par chaque utilisateur et font donc partie intégrante de sa clé publique.

Dans un tel contexte, on connaît un procédé de signature de messages qui comprend essentiellement les opérations suivantes. Dans ce procédé, n est un nombre premier et q est un nombre premier divisant n-1. La clé privée x est choisie au hasard entre 1 et q et la clé publique y est prise égale à $y=g^{-x}$ modulo n. L'entité qui désire émettre et signer un message M choisit au hasard un entier positif k et calcule $r=g^k$ modulo n. Cette entité calcule ensuite une fonction de hachage (ou de condensation) c=h(r, M), la fonction de hachage étant connue de tous. L'entité calcule ensuite une somme s=k+cx modulo n et elle transmet cette somme à une entité authentificatrice ainsi que la fonction c. Cette entité calcule, à l'aide de la clé publique et de la base g, le produit modulo n de $g^s.y^c$ soit r et vérifie que la fonction de hachage h(r, M) redonne bien la fonction de hachage c qu'elle a reçue.

Un tel procédé est décrit dans l'article de C.P. SCHNORR intitulé "Efficient Signature Generation by Smard Cards", publié dans J. Cryptology (1991) 4 : 161-174, pp. 161-174.

Le brevet américain US-A-4,995,082 délivré à C.P. SCHNORR décrit également un procédé analogue avec des algorithmes encore plus complexes où la somme s n'est plus seulement la somme de deux termes modulo q mais une somme double, toujours modulo un certain entier, en l'occurrence p-1.

Si ce procédé donne satisfaction à certains égards, il présente néanmoins l'inconvénient de nécessiter des opérations qui sont des multiplications modulaires. Ces opérations apparaissent dans le calcul de $g^k$ modulo p et dans la somme k+cx modulo q (ou les doubles sommes modulo p-1).

Or, cette opération de multiplication modulaire est complexe et nécessite des moyens importants. Dans des dispositifs simples n'utilisant que des microprocesseurs standards, cette opération n'est guère possible. De même, dans des ordinateurs où les fonctions cryptographiques sont réalisées à l'aide d'un logiciel, le calcul d'une multiplication modulaire n'est jamais très performant.

La réduction du nombre de tels calculs est donc souhaitable. C'est précisément le but de la présente invention.

**Exposé de l'invention**

A cette fin, la présente invention prévoit un procédé de signature de messages, du genre de celui qui vient d'être décrit, mais qui réduit, voire supprime, les multiplications modulaires.

La réduction est obtenue en faisant calculer à l'entité émettrice une somme simple, soit s=k+cx, de l'entier k choisit au hasard et du produit de la fonction de hachage c et de la clé secrète x, et non plus une somme modulo un entier, comme dans l'art antérieur. Cette multiplication modulaire est donc supprimée.

Dans un mode de mise en oeuvre encore plus simple, les nombres r de la forme $g^k$ modulo n, dont le calcul met en oeuvre des multiplications modulaires, sont précalculés et mémorisés dans l'entité signataire, ce qui dispense celle-ci d'avoir à les calculer. Il ne reste plus alors aucune multiplication modulaire à effectuer dans l'entité émettrice.

De façon précise, la présente invention a pour objet un procédé de signature numérique de message, dans lequel une autorité choisit un nombre n, -appelé module, un entier g, appelé base, trois paramètres t, u, v, appelés paramètres de sécurité, cette autorité publiant le module n, la base g et les trois paramètres de sécurité t, u, v auprès de diverses entités utilisatrices, ce procédé comprenant, pour une entité A désirant émettre un message M et le signer numériquement, et pour une entité B désirant vérifier la signature du message M, les opérations suivantes :

a) l'entité A choisit, au hasard, une clé secrète x égale à un entier positif ou nul strictement inférieur au paramètre t et détermine sa clé publique en élevant g à la puissance -x ou à la puissance x modulo n et cette clé publique est certifiée par l'autorité ;
b) l'entité A choisit ensuite, au hasard, un entier positif ou nul k, strictement inférieur au produit des trois paramètres t, u, v et l'entité A garde l'entier k secret, k étant choisi dans un ensemble prédéterminé de valeurs k1,..., ki,..., km ;
c) l'entité A possédant un ensemble de valeurs r1,..., ri,..., rm liées aux différentes valeurs de k par ri = $g^{ki}$ modulo n, l'entité A lit la valeur correspondant à l'entier k choisi dans l'opération b), soit r ;
d) l'entité A calcule ensuite, par une fonction de hachage connue de toutes les entités utilisatrices, la fonction de hachage de l'entier r lu dans l'opération c et du message à signer M, soit c = h(r, M), c étant un entier compris entre 0 et v - 1 ;
e) l'entité A calcule, à partir de sa clé secrète x, de l'entier k choisi et de la fonction de hachage c, un entier s défini par :

$$s = k + cx ;$$

f) l'entité A transmet à l'entité B le message M, la fonction de hachage c et l'entier s précédemment obtenu ;
g) l'entité B vérifie le certificat de la clé publique de A et calcule, à partir du module n, de la clé publique y de l'entité A et de la fonction de hachage c reçue de A, le produit, modulo n de $y^c$ par $g^s$, soit :

$$r = y^c g^s \ modulo \ n ;$$

h) l'entité B vérifie alors que la fonction de hachage du produit r et du message M reçu, soit h(r, M), redonne bien la fonction de hachage c qu'elle a reçue de A, auquel cas l'authentification de la signature du message émis par A est réussie.

Dans une variante, r est remplacé par un condensé de r, par exemple h(r) ou les 128 bits de poids faible (ou poids fort) de r.

De préférence, l'entité A possède un ensemble prédéterminé de valeurs k1,..., ki,..., km et un ensemble correspondant d'entiers r1, ..., ri, ..., rm liés aux ki par ri=$g^{ki}$ modulo n. Dans ce cas, l'entité A, pour déterminer ledit entier r, choisit un nombre ki dans l'ensemble des ki et lit l'entier correspondant ri=$g^{ki}$ modulo n.

De préférence encore, l'autorité et l'entité A possèdent deux générateurs pseudo-aléatoires identiques aptes à délivrer tous deux la même suite pseudo-aléatoire d'entiers k1, ..., ki, ..., km à partir d'une valeur d'initialisation k0 appliqué au générateur. Cette valeur d'initialisation k0 est échangée entre l'entité A et l'autorité de manière sécurisée. L'autorité calcule alors la séquence d'entiers ri=$g^{ki}$ modulo n correspondant à la séquence k1, ..., ki, ..., km liée à l'initialisation k0, transmet la séquence des entiers r1, ..., ri, ..., rm à l'entité A qui les mémorise. L'entité A devant émettre et signer des messages M1, ..., Mi, ..., Mm, met en route son générateur pseudo-aléatoire à partir de la même valeur d'initialisation k0, et, pour chaque message Mi à signer, lit la valeur ki délivrée par son générateur pseudo-aléatoire, lit l'entier ri correspondant et signe le message Mi à l'aide de l'entier ri.

La présente invention a également pour objet un procédé d'authentification de message dans lequel une autorité choisit un nombre n, appelé module, un entier g, appelé base, trois paramètres t, u, v, appelés paramètres de sécurité, cette autorité publiant le module n, la base g et les trois paramètres de sécurité t, u, v auprès de diverses entités utilisatrices, ce procédé comprenant, pour une entité A désirant émettre un message M et pour une entité B désirant authentifier ce message M, les opérations suivantes :

a) l'entité A choisit, au hasard, une clé secrète x égale à un entier positif ou nul strictement inférieur au paramètre t et détermine sa clé publique en élevant g à la puissance -x ou à la puissance x modulo n et cette clé publique est certifiée par l'autorité ;

b) l'entité A choisit ensuite, au hasard, un entier positif ou nul k, strictement inférieur au produit des trois paramètres t, u, v et l'entité A garde l'entier k secret, k étant choisi dans un ensemble prédéterminé de valeurs $k_1,..., k_i,..., k_m$ ;

c) l'entité A possédant un ensemble de valeurs $r_1,..., r_i,..., r_m$ liées aux différentes valeurs de k par $r_i = g^{k_i}$ modulo n, l'entité A lit la valeur correspondant à l'entier k choisi dans l'opération b, soit r ;

d) l'entité A calcule $r' = h(r, M)$ où h est une fonction de hachage connue de toutes les entités utilisatrices ;

e) l'entité B choisit ensuite, au hasard, un entier positif, ou nul c, inférieur à v - 1 et l'envoie à l'entité A ;

f) l'entité A calcule ensuite l'entier $s = k + cx$ et envoie à l'entité B le message M et l'entier s ;

g) l'entité B calcule le produit modulo n de $y^c$ par $g^s$, soit r, et vérifie que $h(r, M) = r'$.

## Exposé détaillé de modes de réalisation

Le procédé de l'invention est précédé d'une phase de prétraitement, dans laquelle l'autorité choisit un module n de grande taille, c'est-à-dire d'au moins 500 bits et une base g. L'autorité détermine également la valeur des trois paramètres de sécurité, t, u et v. Il est recommandé que la longueur de t soit d'au moins 128 bits, celle de u d'au moins 64 bits et celle de v d'au moins 128 bits.

L'entité utilisatrice, que l'on désignera par A, choisit au hasard une clé secrète x, qui est un entier positif ou nul strictement inférieur au paramètre t. L'entité A calcule sa clé publique en élevant g a une certaine puissance de x modulo n, par exemple $y = g^{-x}$ modulo n ou $y = g^x$ modulo n ou par d'autres équations proches de celle-ci. L'inverse se calcule à l'aide de l'algorithme d'EUCLIDE de calcul du plus grand commun diviseur.

La clé publique y (ou n, g et y) est ensuite certifiée par l'autorité, selon un mécanisme de certification quelconque. Si ce mécanisme repose sur un procédé de signature numérique tel que celui qui va être décrit, l'autorité calcule un certificat, c'est-à-dire une signature numérique d'un ensemble de paramètres contenant au minimum la clé publique y (ou n, g et y) et une chaîne I qui rassemble des caractéristiques discriminantes de l'utilisateur associé. Par exemple, I peut être la concaténation, selon un format à définir avec précision, de l'identité de l'utilisateur, de son adresse, de son âge, etc. ainsi que, par exemple, de ses droits à effectuer telle ou telle action.

Tous les utilisateurs devront connaître la clé publique de l'autorité, afin de pouvoir vérifier les certificats qu'elle émet, et connaître ainsi avec certitude la clé publique correspondant à l'utilisateur dont le champ d'identification est I. Ce type de procédure fait partie de l'état de la technique en matière de cryptographie.

Cette phase préliminaire étant achevée, le procédé de signature de l'invention comprend certaines opérations qui vont être décrites maintenant La clé publique de A est supposée connue de B, ce qui peut résulter d'un échange préalable non explicité ici, qui pourrait d'ailleurs être intégré dans le protocole de signature.

1) L'entité A choisit au hasard un entier k positif ou nul strictement inférieur au produit $t.u.v = 2^{400}$ et garde secret cet entier k. Elle calcule ensuite l'entier $r = g^k$ modulo n.

2) L'entité A calcule ensuite $c = h(r, M)$ où h est une fonction de hachage.

3) L'entité A calcule alors l'entier $s = k + cx$.

4) L'entité A envoie (M, c, s) à l'entité B.

5) L'entité B calcule le produit, modulo n, de $y^c$ par $g^s$ :

$$r = y^c g^s \text{ modulo } n$$

et vérifie que

$$h(r, M) = c$$

Si la vérification est faite, l'authentification de la signature M est réussie.

On remarquera que la signature du message a, pour les valeurs de paramètres prises en exemple, une longueur de 560 bits. Avec des valeurs un peu inférieures, mais ne compromettant pas la sécurité du procédé, on pourrait obtenir une longueur d'environ 450 bits.

Dans un mode de réalisation particulier qui va maintenant être décrit, l'entité A n'aura qu'une seule opération à effectuer : celle de l'étape 3. Aucune opération modulaire ne sera donc à mettre en oeuvre.

A cette fin, l'entité A peut être équipée d'une table (ou mémoire) où les entiers $r = g^k$ sont mémorisés à l'adresse k. Il suffit alors à l'entité A de venir lire le nombre r correspondant au nombre k choisi.

En contrepartie, ce dispositif ne peut effectuer qu'un nombre limité de signatures. Cependant, lorsque ce nombre est atteint, on peut, par une procédure de rechargement (éventuellement à distance), mettre à nouveau à la disposition de A un nouveau jeu d'entiers r.

Dans un mode particulier de réalisation, les nombres k utilisés pour les signatures successives sont engendrés par un générateur pseudo-aléatoire partagé par l'utilisateur et l'autorité. La valeur initiale de ce générateur doit être transmise par l'autorité à l'utilisateur (ou le contraire) de façon sécurisée. Cette sécurité peut être obtenue en effectuant cette transmission localement, ou en effectuant cette transmission à distance à l'aide d'un procédé cryptographique (par exemple un procédé de chiffrement) indépendant du procédé actuellement décrit.

Soit k0 cette valeur initiale. Soient k1, ..., ki, ..., km les valeurs engendrées par le générateur pseudo-aléatoire, l'indice i étant l'indice courant allant de 1 à m. L'autorité calcule les valeurs r1, ..., ri, ..., rm correspondantes (par la formule de l'étape 1) et les transmet à l'utilisateur (sans qu'il y ait besoin d'en assurer la confidentialité). L'utilisateur les mémorise. Avantageusement, l'autorité ne transmettra qu'un condensé de chaque valeur r1, ..., ri, ..., rm (par exemple les 160 derniers bits), et le calcul de l'étape 2 ou 5 ne portera que sur ces valeurs tronquées.

L'étape 1 du procédé de signature est alors modifiée comme suit :

1) L'entité A met en oeuvre son générateur pseudo-aléatoire pour engendrer k, une valeur strictement inférieure au produit $tuv=2^{400}$, et va chercher en mémoire la valeur de r (ou la valeur tronquée de r) correspondante que l'autorité lui avait préalablement transmise.

Lorsque l'entité A a produit ses m signatures, elle redemande alors à l'autorité une nouvelle initialisation k'0 (transmis de façon sûre) et une nouvelle séquence r'1, ..., r'i, ..., r'm. L'entité A peut signer à nouveau m messages à l'aide des r'1,..., r'i, ..., r'm.

A titre d'exemple, si chaque nombre ri fait 160 bits, alors, une mémoire de 2 kilooctets permet de produire environ 100 signatures.

La production de telles signatures est quasiment instantanée, même avec un dispositif muni de ressources limitées comme une carte à microprocesseur standard.

Deux variantes permettent de réduire la taille de la signature.

Dans la première, après avoir calculé s, l'entité A vérifie que c(t-1)≤s≤tuv-1. Si ce n'est pas le cas, A (et B dans le cas de l'authentification de message) recommence le processus de signature (ou d'authentification de message) à l'étape b), c'est-à-dire : l'entité A choisit au hasard un entier k etc.... On est ainsi certain que s ne révèle aucune information sur le secret x. Ceci permet de réduire u autant qu'on le désire, mais au prix de reprises éventuelles.

Dans la seconde variante, on remplace dans l'équation c=h(r,M), M par f(M) où f est également une fonction de hachage. Dans le cas où les étapes b) à e) sont exécutées par un dispositif sécurisé, les qualités requises pour h sont moindres : il suffit que h soit à sens unique. Ceci permet de diviser environ par deux la longueur de v.

Dans la description qui précède, l'accent a été mis sur la signature de messages mais l'invention s'applique également à l'authentification de messages qui en est une variante. La différence entre l'authentification de message et la signature numérique de message est que la première résulte d'un procédé interactif et la seconde d'un procédé non interactif. Une conséquence est que les données servant à authentifier un message venant d'une entité A auprès d'une entité B ne peuvent pas être utilisées ultérieurement pour authentifier le même message auprès d'une troisième entité C. Au contraire, une signature numérique peut être vérifiée par n'importe quelle entité à n'importe quel moment.

Dans la variante d'authentification, les opérations sont les suivantes :

1) L'entité A choisit au hasard un entier positif ou nul k strictement inférieur au produit $tuv=2^{270}$ et elle garde k secret. Elle calcule ensuite l'entier :

$$r = g^k \text{ (modulo n)}$$

puis

$$r' = h(r,M)$$

2) L'entité A envoie r' à l'entité B.
3) L'entité B choisit au hasard un entier positif ou nul c strictement inférieur à $v = 2^{30}$ (c'est-à-dire inférieur à v-1).
4) L'entité B envoie c à l'entité A.
5) L'entité A calcule l'entier :

$$s = k + cx.$$

6) L'entité A envoie (M,s) à l'entité B.
7) L'entité B calcule le produit modulo n de $y^c$ par $g^s$ :

$$y^c g^s = r \text{ (modulo n)}$$

et vérifie que

$$h(r,M) = r'.$$

Si la vérification est satisfaite, l'authentification de l'entité A et du message M est réussie.

Les dispositifs et moyens permettant de mettre en oeuvre le procédé de signature qui vient d'être décrit sont classiques. On peut simplement souligner que les entités doivent :

- être rattachées à une autorité de tutelle, qui calcule les certificats, produit les nombres n et g (à moins que chaque utilisateur ne les produise lui-même) et fixe les valeurs des paramètres de sécurité ;

- être capables de détenir les clés secrètes (pour l'entité à authentifier), ce qui suppose un moyen de stockage sécurisé, de façon à ce qu'une lecture non autorisée soit impossible en pratique ;
- être capables de détenir des clés publiques, ce qui suppose un moyen de stockage sécurisé, de façon à ce qu'une modification non autorisée soit impossible en pratique ;
- être capables, dans la variante générale, d'effectuer des multiplications modulo n, ce qui suppose (dans le cas d'une carte à microprocesseur), l'existence d'une unité de calcul spécialisée ; être capables, dans le mode de réalisation particulier, d'effectuer des opérations arithmétiques usuelles, ce qui évite (dans le cas d'une carte à microprocesseur), l'existence d'une unité de calcul spécialisée ;
- être capables de mettre en oeuvre un générateur aléatoire et/ou un générateur pseudo-aléatoire ;
- être capables de dialoguer, ce qui suppose l'existence d'une interface de communication.

Tous ces moyens sont connus de l'homme du métier.

## Revendications

1. Procédé de signature numérique de message dans lequel une autorité choisit un nombre n, appelé module, un entier g, appelé base, trois paramètres t, u, v, appelés paramètres de sécurité, cette autorité publiant le module n, la base g et les trois paramètres de sécurité t, u, v auprès de diverses entités utilisatrices, ce procédé comprenant, pour une entité A désirant émettre un message M et le signer numériquement, et pour une entité B désirant vérifier la signature du message M, les opérations suivantes :

a) l'entité A choisit, au hasard, une clé secrète x égale à un entier positif ou nul strictement inférieur au paramètre t et détermine sa clé publique en élevant g à la puissance -x ou à la puissance x modulo n et cette clé publique est certifiée par l'autorité ;

b) l'entité A choisit ensuite, au hasard, un entier positif ou nul k, strictement inférieur au produit des trois paramètres t, u, v et l'entité A garde l'entier k secret, k étant choisi dans un ensemble prédéterminé de valeurs $k_1,..., k_i,..., k_m$ ;

c) l'entité A possédant un ensemble de valeurs $r_1,..., r_i,..., r_m$ liées aux différentes valeurs de k par $r_i = g^{k_i}$ modulo n, l'entité A lit la valeur correspondant à l'entier k choisi dans l'opération b), soit r ;

d) l'entité A calcule ensuite, par une fonction de hachage connue de toutes les entités utilisatrices, la fonction de hachage de l'entier r lu dans l'opération c et du message à signer M, soit c = h(r, M), c étant un entier compris entre 0 et v - 1 ;

e) l'entité A calcule, à partir de sa clé secrète x, de l'entier k choisi et de la fonction de hachage c, un entier s défini par :

$$s = k + cx ;$$

f) l'entité A transmet à l'entité B le message M, la fonction de hachage c et l'entier s précédemment obtenu ;

g) l'entité B vérifie le certificat de la clé publique de A et calcule, à partir du module n, de la clé publique y de l'entité A et de la fonction de hachage c reçue de A, le produit, modulo n de $y^c$ par $g^s$, soit :

$$r = y^c g^s \text{ modulo } n ;$$

h) l'entité B vérifie alors que la fonction de hachage du produit r et du message M reçu, soit h(r, M), redonne bien la fonction de hachage c qu'elle a reçue de A, auquel cas l'authentification de la signature du message émis par A est réussie.

2. Procédé selon la revendication 1, dans lequel :

- l'autorité et l'entité A possèdent deux générateurs pseudo-aléatoires identiques aptes à délivrer deux suites pseudo-aléatoires d'entiers $k_1,..., k_i,..., k_m$ identiques à partir d'une valeur d'initialisation $k_0$ du générateur, cette valeur d'initialisation $k_0$ étant échangée entre l'entité A et l'autorité de manière sécurisée ;
- l'autorité calcule la séquence d'entiers $r_i = g^{k_i}$ modulo n correspondant à la séquence $k_1,..., k_i,..., k_m$ liée à l'initialisation $k_0$, transmet la séquence des entiers $r_1,..., r_i,..., r_m$ à l'entité A qui les mémorise ;
- l'entité A devant émettre et signer des messages $M_1,..., M_i,..., M_m$ met en route son générateur pseudo-aléatoire à l'aide de la valeur d'initialisation $k_0$, et pour chaque message $M_i$ à signer lit la valeur $k_i$ délivrée par le générateur pseudo-aléatoire, lit l'entier $r_i$ correspondant et signe le message $M_i$ à l'aide de l'entier $r_i$.

3. Procédé selon la revendication 2, dans lequel, après avoir signé m messages $M_1,..., M_i,..., M_m$ et épuisé ses m entiers $r_1,..., r_i,..., r_m$, l'entité A et l'autorité échangent de manière sécurisée une nouvelle valeur d'initialisation $k'_0$ pour les deux générateurs pseudo-aléatoires, l'autorité transmet à l'entité A une nouvelle séquence d'entiers $r'_1,..., r'_i,...,$

r'm, que l'entité A utilise pour une nouvelle série de signature de m messages.

4. Procédé selon la revendication 1, dans lequel l'entité A vérifie que $c(t - 1) \leq s \leq tuv - 1$ et, si ce n'est pas le cas, l'entité A recommence le processus de signature.

5. Procédé selon la revendication 1, dans lequel, dans le calcul de la fonction hachage $c = h(r, M)$, le message M est remplacé par une fonction $f(M)$ où f est également une fonction de hachage.

6. Procédé d'authentification numérique de message dans lequel une autorité choisit un nombre n, appelé module, un entier g, appelé base, trois paramètres t, u, v, appelés paramètres de sécurité, cette autorité publiant le module n, la base g et les trois paramètres de sécurité t, u, v auprès de diverses entités utilisatrices, ce procédé comprenant, pour une entité A désirant émettre un message M et pour une entité B désirant authentifier ce message M, les opérations suivantes :

a) l'entité A choisit, au hasard, une clé secrète x égale à un entier positif ou nul strictement inférieur au paramètre t et détermine sa clé publique en élevant g à la puissance -x ou à la puissance x modulo n et cette clé publique est certifiée par l'autorité ;
b) l'entité A choisit ensuite, au hasard, un entier positif ou nul k, strictement inférieur au produit des trois paramètres t, u, v et l'entité A garde l'entier k secret, k étant choisi dans un ensemble prédéterminé de valeurs $k1,..., ki,..., km$ ;
c) l'entité A possédant un ensemble de valeurs $r1,..., ri,..., rm$ liées aux différentes valeurs de k par $ri = g^{ki}$ modulo n, l'entité A lit la valeur correspondant à l'entier k choisi dans l'opération b, soit r ;
d) l'entité A calcule $r' = h(r, M)$ où h est une fonction de hachage connue de toutes les entités utilisatrices ;
e) l'entité B choisit ensuite, au hasard, un entier positif, ou nul c, inférieur à $v - 1$ et l'envoie à l'entité A ;
f) l'entité A calcule ensuite l'entier $s = k + cx$ et envoie à l'entité B le message M et l'entier s ;
g) l'entité B calcule le produit modulo n de $y^c$ par $g^s$, soit r, et vérifie que $h(r, M) = r'$.

**Patentansprüche**

1. Verfahren zur digitalen Unterzeichnung von Nachrichten, bei dem eine Autorität eine Modul genannte Zahl n, eine Basis genannte Ganzzahl g und drei Sicherheitsparameter genannte Parameter t, u, v wählt, wobei diese Autorität den Modul n, die Basis g und die drei Sicherheitsparameter t, u, v gegenüber diversen Benutzer-Entitäten veröffentlicht und dieses Verfahren dabei für eine Entität A, die eine Nachricht M senden und digital unterzeichnen möchte, und eine Entität B, die die Unterzeichnung der Nachricht M verifizieren möchte, die folgenden Operationen umfaßt:

a) die Entität A wählt, zufällig, einen Geheimschlüssel x gleich einer positiven ganzen Zahl oder Null, strikt kleiner als der Parameter t, und bestimmt ihren öffentlichen Schlüssel, indem sie g in die Potenz -x oder die Potenz x modulo n erhebt und dieser öffentliche Schlüssel durch die Autorität zertifiziert wird;
b) die Entität A wählt anschließend und zufällig eine positive ganze Zahl oder Null k, strikt kleiner als das Produkt der drei Parameter t, u, v, und die Entität A behält die Ganzzahl k geheim, wobei k aus einer festgelegten Gruppe von Werten $k1,..., ki..., km$ ausgewählt wird;
c) die Entität A besitzt eine durch $ri = g^{ki}$ modulo n mit den verschiedenen Werten von k verknüpfte Wertegruppe $r1,..., ri,..., rm$ und sie liest den der in der Operation b) ausgewählten Ganzzahl k entsprechenden Wert, der r sei;
d) die Entität A berechnet anschließend mittels einer allen Benutzer-Entitäten bekannten Zerhackerfunktion die Zerhackerfunktion der in der Operation c gelesenen Ganzzahl r und der zu unterzeichnenden Nachricht M, also $c = h(r, M)$, wobei c eine zwischen 0 und v-1 enthaltene Ganzzahl ist;
e) die Entität A berechnet mittels seines Geheimschlüssels x, der ausgewählten Ganzzahl k und der Zerhackerfunktion c eine Ganzzahl s, definiert durch:

$$s = k + cx \; ;$$

f) die Entität A überträgt die Nachricht M, die Zerhackerfunktion c und die vorhergehend erhaltene Ganzzahl s zur Entität B;
g) die Entität B verifiziert das Zertifikat des öffentlichen Schlüssels von A und berechnet mittels des Moduls n, des öffentlichen Schlüssels y der Entität A und der von A empfangenen Zerhackerfunktion c das Produkt modulo n von $y^c$ mal $g^s$, also:

$$r = y^c g^s \text{ modulo } n \; ;$$

h) die Entität B verifiziert dann, daß die Zerhackerfunktion des Produkts r und der empfangenen Nachricht M, also $h(r, M)$, tatsächlich die Zerhackerfunktion c wiedergibt, die sie von A empfangen hat, womit gegebenenfalls die Authentifizierung der durch A ausgesandten Nachricht erfolgreich durchgeführt ist.

2. Verfahren nach Anspruch 1, bei dem:

- die Autorität und die Entität A zwei identische Pseudozufallsgeneratoren besitzen, die fähig sind, ausgehend von einem Initialisierungswert k0 des Generators, zwei Folgen von identischen Pseudozufalls-Ganzzahlen k1,..., ki,..., km zu liefern, wobei dieser Initialisierungswert k0 auf abgesicherte Weise zwischen der Entität A und der Autorität ausgetauscht wird;
- die Autorität die der mit der Initialisation k0 verknüpften Sequenz k1,..., ki,..., km entsprechende Ganzzahlensequenz $ri = g^{ki}$ modulo n berechnet und die Sequenz der Ganzzahlen r1,..., ri,..., rm zur Entität A überträgt, die sie abspeichert;
- die Entität A, die Nachrichten M1,..., Mi,..., Mm senden und unterzeichnen muß, mit Hilfe des Initialisierungswerts k0 ihren Pseudozufallsgenerator startet und für jede zu unterzeichnende Nachricht Mi den durch den Zufallsgenerator gelieferten Wert ki liest, die entsprechende Ganzzahl ri liest und die Nachricht Mi mit Hilfe der Ganzzahl ri unterzeichnet.

3. Verfahren nach Anspruch 2, bei dem die Entität A, nachdem sie m Nachrichten M1,..., Mi,..., Mm unterzeichnet hat und ihre m Ganzzahlen r1,..., ri,..., rm verbraucht sind, mit der Autorität auf abgesicherte Weise einen neuen Initialisierungswert k'0 für die beiden Pseudozufallsgeneratoren austauscht und die Autorität eine neue Ganzzahlensequenz r'1,..., r'i,..., r'm zur Entität A überträgt, die die Entität A für eine neue Unterzeichnungsserie von m Nachrichten benutzt.

4. Verfahren nach Anspruch 1, bei dem die Entität A verifiziert, daß $c(t - 1) \leq s \leq tuv - 1$ und, wenn dies nicht der Fall ist, die Entität A das Unterzeichnungsverfahren neu beginnt.

5. Verfahren nach Anspruch 1, bei dem in der Berechnung der Zerhackerfunktion $c = h(r, M)$ die Nachricht M ersetzt wird durch eine Funktion f(M), wo f ebenfalls eine Zerhackerfunktion ist.

6. Verfahren zur digitalen Authentifizierung von Nachrichten, bei dem eine Autorität eine Modul genannte Zahl n, eine Basis genannte Ganzzahl g und drei Sicherheitsparameter genannte Parameter t, u, v wählt, wobei diese Autorität den Modul n, die Basis g und die drei Sicherheitsparameter t, u, v gegenüber diversen Benutzer-Entitäten veröffentlicht und dieses Verfahren dabei für eine Entität A, die eine Nachricht M senden und digital unterzeichnen möchte, und eine Entität B, die die Unterzeichnung dieser Nachricht M authentifizieren möchte, die folgenden Operationen umfaßt:

a) die Entität A wählt, zufällig, einen Geheimschlüssel x gleich einer positiven ganzen Zahl oder Null, strikt kleiner als der Parameter t, und bestimmt ihren öffentlichen Schlüssel, indem sie g in die Potenz -x oder die Potenz x modulo n erhebt und dieser öffentliche Schlüssel durch die Autorität zertifiziert wird;
b) die Entität A wählt anschließend und zufällig eine positive ganzen Zahl oder Null k, strikt kleiner als das Produkt der drei Parameter t, u, v, und die Entität A behält die Ganzzahl k geheim, wobei k aus einer festgelegten Gruppe von Werten k1,..., ki..., km ausgewählt wird;
c) die Entität A besitzt eine durch $ri = g^{ki}$ modulo n mit den verschiedenen Werten von k verknüpfte Wertegruppe r1,..., ri,..., rm und sie liest den der in der Operation b) ausgewählten Ganzzahl k entsprechenden Wert, der r sei;
d) die Entität A berechnet r' = h(r, M), wobei h eine allen Benutzer-Entitäten bekannte Zerhackerfunktion ist;
e) die Entität B wählt anschließend und zufällig eine positive ganze Zahl oder Null c, kleiner als v - 1 und sendet sie an die Entität A;
f) die Entität A berechnet anschließend die Ganzzahl s = k + cx und sendet die Nachricht M und die Ganzzahl s an die Entität B;
g) die Entität B berechnet das Produkt modulo n von $y^c$ mal $g^s$, also r, und verifiziert, daß h(r, M) = r'.

**Claims**

1. Process for the digital signing of a message in which an authority chooses a number n, called the modulus, an integer g, called the base, three parameters t, u, v, called the security parameters, this authority publishing the modulus n, the base g and the three security parameters t, u, v at various user entities, this process comprising, for an entity A wishing to transmit a message M and sign it digitally, and for an entity B wishing to verify the signature of the message M, the following operations:

a) the entity A chooses, at random, a secret key x equal to a positive or zero integer strictly less than the parameter t and determines his public key by raising g to the power -x or to the power x modulo n and this public key is certified by the authority;
b) the entity A then chooses, at random, a positive or zero integer k strictly less than the product of the three parameters t, u, v and the entity A keeps the integer k secret, k being chosen from a predetermined set of values k1, ..., ki, ..., km;

c) the entity A possessing a set of values r1, ..., ri, ...., rm related to the various values of k by ri = $g^{ki}$ modulo n, the entity A reads the value corresponding to the integer k chosen in operation b), namely r;

d) the entity A then calculates, via a hash function known to all the user entities, the hash function of the integer r read in operation c and of the message to be signed M, namely c = h(r, M), c being an integer lying between 0 and v-1 ;

e) the entity A calculates, from his secret key x, from the chosen integer k and from the hash function c, an integer s defined by :

$$s = k + cx;$$

f) the entity A forwards the message M, the hash function c and the integer s obtained above to the entity B;

g) the entity B verifies the certificate of the public key of A and calculates, from the modulus n, from the public key y of the entity A and from the hash function c received from A, the product, modulo n of $y^c$ and $g^s$, namely:

$$r = y^c g^s \text{ modulo n;}$$

h) the entity B then verifies that the hash function of the product r and of the message M received, namely h(r, M), indeed yields the hash function c which he received from A, in which case the authentication of the signature of the message transmitted by A is successful.

2. Process according to Claim 1, in which:

- the authority and the entity A possess two identical pseudo-random generators capable of delivering two identical pseudo-random series of integers k1, ..., ki, ..., km from a generator initialization value k0, this initialization value k0 being exchanged between the entity A and the authority in a secure manner;
- the authority calculates the sequence of integers ri = $g^{ki}$ modulo n corresponding to the sequence k1, ..., ki, ..., km related to the initialization k0, forwards the sequence of integers r1, ..., ri, ..., rm to the entity A who stores them;
- the entity A who is to transmit and sign messages M1, ..., Mi, ..., Mm starts up his pseudo-random generator with the aid of the initialization value k0, and for each message Mi to be signed reads the value ki delivered by the pseudo-random generator, reads the corresponding integer ri and signs the message Mi with the aid of the integer ri.

3. Process according to Claim 2, in which after having signed m messages M1, ..., Mi, ..., Mm and exhausted his m integers r1, ..., ri, ..., rm, the entity A and the authority exchange a new initialization value k'0 in a secure manner in respect of the two pseudo-random generators, the authority forwards a new sequence of integers r'1, ..., r'i, ..., r'm, to the entity A, which the latter uses for a new run of signing m messages.

4. Process according to Claim 1, in which the entity A verifies that c(t - 1) ≤ s ≤ tuv - 1 and, if such is not the case, the entity A recommences the signing procedure.

5. Process according to Claim 1, in which, in the calculation of the hash function c = h(r, M), the message M is replaced by a function f(M) where f is likewise a hash function.

6. Process for the digital authentication of a message in which an authority chooses a number n, called the modulus, an integer g, called the base, three parameters t, u, v, called the security parameters, this authority publishing the modulus n, the base g and the three security parameters t, u, v at various user entities, this process comprising, for an entity A wishing to transmit a message M and for an entity B wishing to authenticate this message M, the following operations:

a) the entity A chooses, at random, a secret key x equal to a positive or zero integer strictly less than the parameter t and determines his public key by raising g to the power -x or to the power x modulo n and this public key is certified by the authority;

b) the entity A then chooses, at random, a positive or zero integer k strictly less than the product of the three parameters t, u, v and the entity A keeps the integer k secret, k being chosen from a predetermined set of values k1, ..., ki, ..., km;

c) the entity A possessing a set of values r1, ..., ri, ...., rm related to the various values of k by ri = $g^{ki}$ modulo n, the entity A reads the value corresponding to the integer k chosen in operation b, namely r;

d) the entity A calculates r' = h(r, M) where h is a hash function known to all the user entities;

e) the entity B then chooses, at random, a positive or zero integer c, less than v - 1 and sends it to the entity A;

f) the entity A then calculates the integer $s = k + cx$ and sends the message M and the integer s to the entity B;

g) the entity B calculates the product modulo n of $y^c$ and $g^s$, namely r, and verifies that $h(r, M) = r'$.